# EUROPEAN PATENT APPLICATION

(11) **EP 4 095 763 A1**
(43) Date of publication of application: **30.11.2022**
(21) Application number: 21175758.8
(22) Date of filing: 25.05.2021
(51) Int. Cl.: G06N 5/02, G06N 20/00, G06N 7/00

(54) **DEVICE AND COMPUTER IMPLEMENTED METHOD FOR AUTOMATICALLY GENERATING NEGATIVE SAMPLES FOR TRAINING KNOWLEDGE GRAPH EMBEDDING MODELS**

(71) Applicant: Robert Bosch GmbH, 70442 Stuttgart (DE)
(72) Inventor: Jain, Nitisha, 14469 Potsdam (DE); Stepanova, Daria, 71272 Renningen (DE); Tran, Trung Kien, 89073 Ulm (DE)

(57) **Abstract**

Device, in particular computer implemented method, computer program and non-transitory computer-readable storage, wherein the method for automatically generating negative samples for training a knowledge graph embedding model (208), comprises providing at least one first triple (212), wherein the first triple (212) is a true triple of a knowledge graph (100), providing at least one second triple (214), training the knowledge graph embedding model (208) to predict triples of the knowledge graph (100) depending on a set of triples (216) comprising the at least one first triple (212) and the at least one second triple (214), determining vector representations of entities and relations (218) with the knowledge graph embedding model (208), determining a plurality of triples (228) with the vector representations of entities and relations (218), providing an ontology (222) comprising constraints that characterize correct triples, determining with the ontology at least one triple (224) in the plurality of triples (228) that violates at least one constraint of the constraints or that violates a combination of at least some of the constraints.

## Description

### Background

The invention relates to a device and method for automatically generating negative samples for training knowledge graph embedding models.

Embedding methods for embedding a knowledge graph, KG, comprise entities and relations of the KG into a low-dimensional vector space while preserving the structure of the KG.

Wang, Q., Mao, Z., Wang, B., Guo, L.: Knowledge graph embedding: A survey of approaches and applications. IEEE Trans. Knowl. Data Eng. 29(12), 2724-2743 (2017) discloses such methods.

These methods have proved to be useful for various KG curation tasks such as KG completion, where knowledge graphs are extended by predicting missing (subject, predicate, object) triples. Typically, the training of KG embedding models aims at discerning between correct (positive) and incorrect (negative) triples. However, since KGs follow the open-world assumption, under which missing triples are treated as unknown rather than false, negative triple generation is challenging.

### Disclosure of the invention

Negative samples are required for the construction of many knowledge graph embedding models, and it is critically important to ensure that they are of high quality, i.e., account for the domain knowledge and are capable of guiding the embedding model towards predicting facts that are consistent with the available knowledge, i.e. the knowledge graph and the ontology.

An in particular computer implemented method for automatically generating negative samples for training a knowledge graph embedding model, comprises providing at least one first triple, wherein the first triple is a true triple of a knowledge graph, providing at least one second triple, training the knowledge graph embedding model to predict triples of the knowledge graph depending on a set of triples comprising the at least one first triple and the at least one second triple, determining vector representations of entities and relations with the knowledge graph embedding model, determining a plurality of triples with the vector representations of entities and relations, providing an ontology comprising constraints that characterize correct triples, determining with the ontology at least one triple in the plurality of triples that violates at least one constraint of the constraints or that violates a combination of at least some of the constraints. One or more such the triple will be used as negative samples for training embedding models. The negative samples are usable to improve an accuracy of the knowledge graph embedding model with regard to predicting missing relations between entities in the knowledge graph.

Determining the at least one triple may comprise selecting a number of triples in the plurality of triples having a higher likelihood of being a fact of the knowledge graph than other triples in the plurality of triples. This way, facts that are erroneously considered by a machine learning system to be possible facts are identified as negative samples. These negative samples are usable to improve the training further.

The method may comprise determining in particular with the knowledge graph embedding model, for at least one triple in the plurality of triples its likelihood of being a fact of the knowledge graph. This way, possible facts can be ranked according to the likelihood.

Determining the at least one triple may comprise providing a knowledge graph fact from the knowledge graph, wherein the knowledge graph fact comprises a first entity, and a reference relation or a representation thereof, wherein the reference relation is of a reference type, determining a triple in the plurality of triples that comprises the first entity and a relation, determining if the relation is of a type that is allowable according to the constraint or not, determining that the triple violates the constraint if the type is not allowable.

Determining the at least one triple may comprise determining a set of triples from the plurality of triples that comprises triples that violate the constraint, and selecting from the plurality of triples at least one triple that is different than the triples in the set of triples. Thus, the newly created negative sample is different than the already available negative samples.

For automatically training the knowledge graph embedding model the method may further comprise determining the at least one triple in a first iteration, adding the at least one triple to a set of triples for a second iteration and training the knowledge graph embedding model in the second iteration with the set of triples for the second iteration and/or determining in the second iteration the at least one triple with the set of triples for the second iteration. A quality of the generated negative samples is improved iteratively, e.g. by starting with standard random sampling of negative samples, training the knowledge graph embedding model on them, and then exploiting the contracting predictions by the knowledge graph embedding model for the selection of negative samples, i.e. the at least one triple, for the next iteration of the method. Thus, the model is improved iteratively.

A device for automatically generating negative samples for training a knowledge graph embedding model, comprises a storage that is configured for providing a knowledge graph and/or an ontology comprising constraints that characterize correct triples, a machine learning system, that is configured for providing at least one first triple, wherein the first triple is a true triple of the knowledge graph, providing at least one second triple, training the knowledge graph embedding model to predict triples of the knowledge graph depending on a set of triples comprising the at least one first triple and the at least one second triple, and determining vector representations of entities and relations with the knowledge graph embedding model, and a generator that is configured for determining a plurality of triples with the vector representations of entities and relations, wherein the generator is configured for determining with the ontology at least one triple in the plurality of triples that violates at least one constraint of the constraints or that violates a combination of at least some of the constraints. This device improves a training system with negative samples that are derived relying on the knowledge graph and also on the ontology, that the knowledge graph accompanies.

The generator may be configured for selecting a number of triples in the plurality of triples having a higher likelihood of being a fact of the knowledge graph than other triples in the plurality of triples. Thus, the generator finds negative samples that are erroneously considered by the knowledge graph embedding model to be possible facts of the knowledge graph.

The device may comprise a machine learning system that is configured for determining in particular with the knowledge graph embedding model, for at least one triple in the plurality of triples its likelihood of being a fact of the knowledge graph. The likelihood allows automatically ranking the triples for processing by the generator.

The device may comprise storage that is configured for providing a knowledge graph fact from the knowledge graph, wherein the knowledge graph fact comprises a first entity, and a reference relation or a representation thereof, wherein the reference relation is of a reference type, and the generator is configured for determining a triple in the plurality of triples that comprises the first entity, and a relation, determining if the relation is of a type that is allowable according to the constraint or not, determining that the triple violates the constraint if the type is not allowable. Thus, the reference relation is automatically generated and the triple is evaluated depending on the type of the reference.

For determining the at least one triple, the generator may be configured for determining a set of triples from the plurality of triples that comprises triples that violate the constraint, and selecting from the plurality of triples at least one triple that is different than the triples in the set of triples. Thus, duplicate negative samples are avoided.

For automatically training the knowledge graph embedding model, the machine learning system may further be configured for determining the at least one triple in a first iteration, adding the at least one triple to a set of triples for a second iteration and for training the knowledge graph embedding model in the second iteration with the set of triples for the second iteration and/or for determining in the second iteration the at least one triple with the set of triples for the second iteration. Thus, the knowledge graph embedding model is generated automatically.

A computer program may comprise instructions that, when executed by a computer, cause the computer to perform the steps of the method. A non-transitory computer-readable storage medium may store the computer program.

Further advantageous embodiments are derivable from the enclosed description and the drawing. In the drawing:
Fig. 1 schematically depicts a knowledge graph,
Fig. 2 schematically depicts a device,
Fig. 3 schematically depicts a method.

The following description relates to negative triple generation, which may use an ontology with which a knowledge graph, KG, is equipped.

An ontology is a conceptualization of the domain of interest, which describes general schematic constraints that should hold in the KG.

The ontology is used during the generation of negative samples, i.e. negative triples.

An exemplary iterative method for training an embedding model proceeds as follows.

First, the embedding model is trained using an existing strategy for generating negative samples. Then the trained embedding model is used to predict triples, which are in turn checked for consistency with respect to the existing data in the KG and the ontology. A predicted triple that is considered to be true or correct may be used as fact. A triple of the KG that is considered to be true or correct is referred to as true triple, correct triple or fact.

The predicted triples may be taken one by one, added to the KG and the ontological reasoning may be applied to detect whether the added triple caused any inconsistencies. In case it did, the predicted triple is added as a negative sample for the next iteration of the embedding training.

Following the described procedure, the triples predicted by the embedding model in the first iteration that result in inconsistency when being added to the KG and its ontology, are stored as negative samples for the next round of the embedding training.

This process may be repeated for several iterations until the model has been successfully trained to predict only facts that are consistent.

Domain knowledge, formalized in the form of the ontology, is used to automatically detect such predictions that are usable as negative samples.

An inconsistency in the KG and ontology is for example determined as described in Tran, T., Gad-Elrab, M.H., Stepanova, D., Kharlamov, E., Strötgen, J.: Fast computation of explanations for inconsistency in large-scale knowledge graphs. In: WWW'20: The Web Conference 2020, Taipei, Taiwan, April 20-24, 2020. pp. 2613-2619 (2020).

The KG represents interlinked collections of factual information. The KG may be encoded as a set of (subject; predicate; object) triples, e.g., (john; worksAt; bosch). Subjects or objects of such triples are referred to as entities and predicates are referred to as relations. The set of triples of a KG can be represented as a directed graph, whose vertices and edges are labeled. KG triples are referred to as facts. KG facts may be represented as unary or binary ground predicates as follows: man(john), worksAt(john; bosch).

A Knowledge graph embedding, KGE, concerns embedding KG entities and relations into continuous vector spaces with a user-specified dimension n. More specifically, KGE models take as input a set of KG triples and aim at mapping the entities and relations into the n-dimensional vector space such that some features reflecting the KG structure are preserved. These features are captured by the objective function of the respective embedding model. This way from relational data, a set of numerical vectors is obtained.

An ontology is a conceptualization of the domain of interest represented as a set of constraints, e.g. comprising axioms and/or statements comprising axioms. The ontology reflects a schema that the KG should follow. E.g., O = {∃worksAt 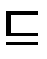 person, ∃locatedln⁻ 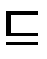 *location,* location 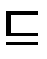 ¬ person}

A triple violates for example a constraint or a combination of constraints if the union of that triple with the constraint or the combination of constraints, is inconsistent.

For example for <bosch gmbh, type, Person> and a constraint: "Company and Person are disjoint" and assumed that <bosch gmbh, type, Company> is the true triple in the knowledge graph, then <bosch gmbh, type, Person> violates the constraint.

The first axiom states that those who work at someplace are person. The second axiom reflects that if the first entity has the relation locatedln with the second entity, then the second entity must be of the type location. Finally, the last axiom says that location and person are disjoint.

A KG is inconsistent w.r.t. an ontology if there is no model for the KG and the ontology or in other words if there exists a contradiction in the KG w.r.t. to terms, e.g. axioms or statements, in the ontology. For example, the ontology O from above along with the facts (john, type, person); (bosch, locatedln, john) is inconsistent. Indeed, john is known to be a person, and due to the second ontology axiom, also location which is forbidden according to the last axiom in the ontology.

Inconsistency checking is the process of detecting contradictions in the KG and the ontology.

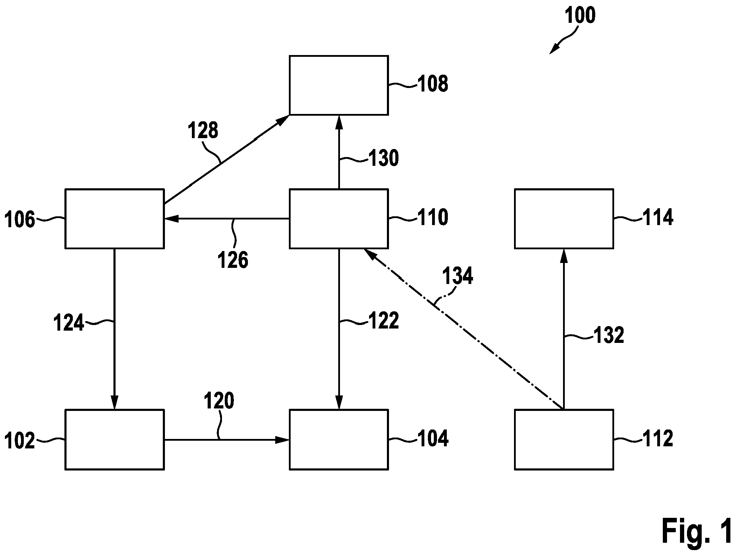

Figure 1 schematically depicts a knowledge graph 100. The knowledge graph 100 comprises a plurality of entities and a plurality of relations. The following knowledge graph facts are available from the knowledge graph 100. A knowledge graph fact in the example is defined by a triple (X,Y,Z) wherein X indicates a subject entity, Y indicates a relation, Z indicates an object entity.
(102, 120, 104)
(110, 122, 104)
(106, 124, 102)
(106, 128, 108)
(110, 126, 106)
(110, 130, 108)
(112, 132, 114)

A entity may be of a type from a set of entity types. This set of entity types is represented in the example by at least one entity in the knowledge graph 100. In the example the entity 102 is of a first entity type, the entity 104 and the entity 112 are of a second entity type, the entity 106 and the entity 110 are of a third entity type, the entity 108 is of a fourth entity type. The first entity type in the example is "company name". The second entity type in the example is "country". The third entity type in the example is "first name". The fourth entity type in the example is "type". Other entity types may exist. The ontology may comprise entity types that are present in the KG. The ontology may comprise entity types that are different than the entity types of the KG.

A label for a relation may be selectable from a set of relation labels. This set of relation labels comprises in the example the following labels: type, worksAt, friendOf, livesln, locatedln. In the example, the label "type" is for relating a subject entity to an object entity that is of the fourth entity type. The relation 128, the relation 130, and the relation 132 in the example are labelled "type".

The relation 120 in the example is labeled "locatedln". The relation 122 in the example is labeled "livesln". The relation 124 in the example is labeled "worksAt". The relation 126 in the example is labeled "friendOf". Other relation types or labels may be used. The ontology may comprise relation types or labels thereof that are present in the KG. The ontology may comprise relation types or labels thereof that are different than in the KG.

An ontology of the knowledge graph 100 might define a constraint that characterizes correct triples. In one example, negative samples violate the constraint. The ontology might define several constraints that characterize correct triples. In one example, negative samples violate one of the several constraints or more of the several constraints or all of the several constraints. In one example, negative samples violate a combination of at least some of the constraints that characterizes correct triples. Correct triples are in the example triples that are allowable in the knowledge graph 100. In the example, a negative sample is a sample that is not an allowable triple in the knowledge graph 100. This means that the ontology defines at least one constraint for the negative sample, that the negative sample does not meet.

This means, the ontology contains constraints specifying which triples are allowed and which triples are not allowed. Triples violating one constraint or more constraints are wrong triples.

According to an example, the ontology defines that a subject entity that relates with a relation "type" to an object entity must not relate with the relation "type" to another object entity.

According to an example, a subject entity that relates with a relation "type" to an object entity "company" type must not relate with a relation "locatedln" to an object entity "first name".

For example, a triple <bosch, locatedln, thomas> would violates a constraint saying that the target or object of the "locatedln" relations must be a Location. It violates the constrain because "thomas" is a Person, e.g. as specifyed by another correct triple in the knowledge graph.

In the example, a relation 134 "locatedln" from the entity 112 to the entity 110 is erroneous according to the ontology. This means, the triple (112, 134, 110) that includes the relation 134 is a negative sample.

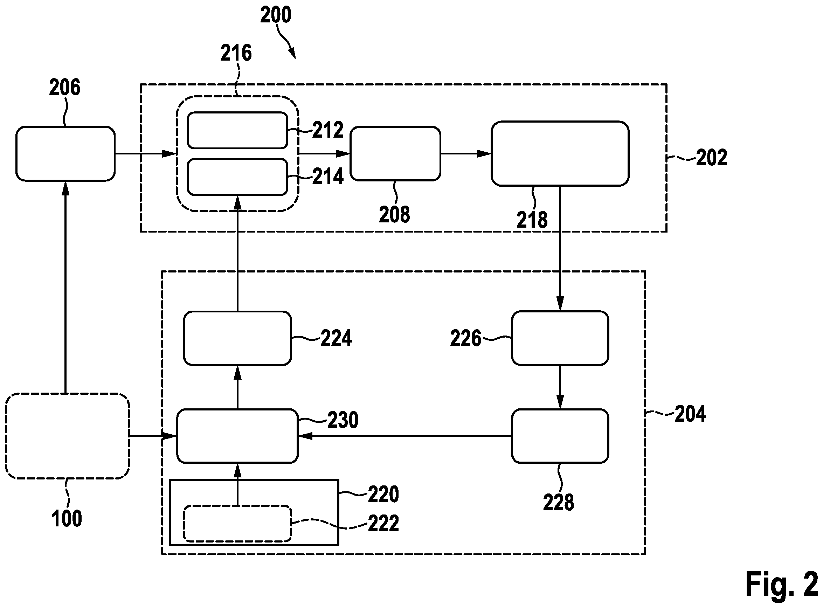

Figure 2 schematically depicts a device 200.

The device 200 comprises a machine learning system 202, a generator 204 and a storage 206.

The device 200 is configured for automatically generating negative samples for training a knowledge graph embedding model 208 based on a knowledge graph 100. The device 200 may be configured for automatically training the knowledge graph embedding model 208.

In the following description, fact or knowledge graph fact refers to a triple of two entities and a relation or an in particular numeric representation thereof.

The storage 206 is configured for providing at least one first triple 212 of the knowledge graph 100. The at least one first triple 212 is stored and/or derived from the knowledge graph 100. In the example, a plurality of first triples 212 is determined.

The generator 204 is configured for providing at least one second triple 214.

The machine learning system 202 is configured for training the knowledge graph embedding model 208 to predict facts of the knowledge graph 100 depending on a set of triples 216 comprising the at least one first triple 212 and the at least one second triple 214.

The machine learning system 202 is configured for determining a plurality of vector representations of entities and relations 218 with the knowledge graph embedding model 208.

The device 200 comprises a storage 220 that is configured for providing an ontology 222 comprising a plurality of constraints that characterize negative samples.

The generator 204 may be configured for determining at least one triple 224 that violates at least one constraint that characterizes correct triples.

The generator 204 may be configured for the at least one triple 224 that violates a combination of at least some of the constraints that characterize correct triples.

The machine learning system 202 in the example is configured for determining the at least one triple 224 with the set of facts 216 in a first iteration. The machine learning system 202 in the example is configured for adding the at least one triple 224 to the set of facts 216 for a second iteration.

The machine learning system 202 in the example is configured for training the knowledge graph embedding model 208 in the second iteration.

The machine learning system 202 in the example is configured for determining in the second iteration the at least one triple 224 with the set of facts 216 for the second iteration.

The generator 204 may be configured for selecting, with a selector 226, a number of triples 228 obtained from the vector representations of entities and relations 218 having a higher likelihood of being a fact of the knowledge graph 100 than other triples obtained from the vector representations of entities and relations 218.

The machine learning system 202 may be configured for determining in particular with the knowledge graph embedding model 208, for at least one triple in the plurality of vector representations of entities and relations 218 its likelihood of being a fact of the knowledge graph 100.

The generator 204 may be configured for determining, with a reasoner 230, the at least one third triple 224 from the number of triples 228. The reasoner 230 is for example adapted for processing the terms of the ontology to select the at least one third triple 224 from the number of triples.

For determining the at least one second triple 214, the generator 204 may be configured for sampling two entities of the at least one second triple 214 from entities and/or a relation between two entities from relations of the knowledge graph 100.

For determining the at least one second triple 214, the generator 204 may be configured for sampling representations of two entities of the at least one second triple 214 from representations of entities of the knowledge graph 100 and/or a relation between the two entities from representations of relations of the knowledge graph 100.

The device 200 may be configured for using the knowledge graph 100 and the ontology 222 to identify negative samples.

The storage 206 may be configured in one example for providing a knowledge graph fact from the knowledge graph 100. This knowledge graph fact comprises a first entity, and a reference relation or a representation thereof. The reference relation is of a reference type. The generator 204 may be configured for determining a triple in the plurality of triples that comprises the first entity, and a relation. The generator 204 may be configured for determining if the relation is of a type that is allowable according to the constraint or not. The generator 204 may be configured for determining that the triple violates the constraint or a combination of at least some of the constraints, if the type is not allowable. This means that the triple comprises the same first entity as the knowledge graph fact. This means that the triple comprises a relation type that is incompatible, according to the ontology, with the relation type of the reference relation. Therefore, the triple is a negative sample.

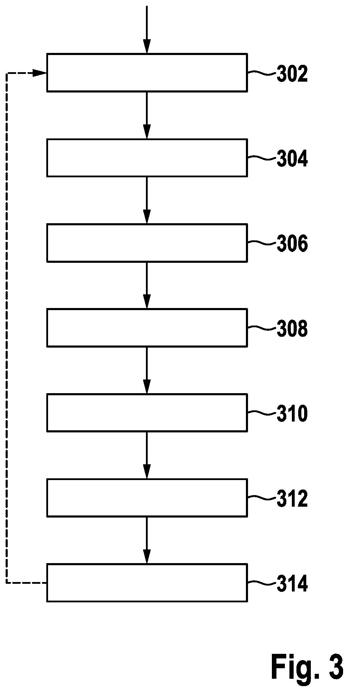

A method, in particular a computer implemented method for automatically generating negative samples for training the knowledge graph embedding model 208 is described below with reference to figure 3. For training iteratively with the negative samples, the method comprises optional steps.

In the method, a step 302 is executed.

In the step 302 the at least one first triple 212 of the knowledge graph 100 is provided. In the example, a plurality of first triples 212 is provided.

Afterwards a step 304 is executed.

In the step 304, the at least one second triple 214 is provided.

The at least one second triple 214 may be determined in an initial step from the knowledge graph 100.

In one example, two entities are sampled in particular randomly from entities and a relation is sampled from relations of the knowledge graph. The at least one second triple 214 in this example comprises a first entity, a relation and a second entity.

Afterwards a step 306 is executed.

In the step 306, the knowledge graph embedding model 208 is trained to predict facts of the knowledge graph 100 depending on the set of triples 216 comprising the at least one first triple 212 and the at least one second triple 214.

The knowledge graph embedding model 208 may be configured to linearly map an embedding of a subject entity, e.g. a vector, with an embedding of a relation, e.g. a vector or a matrix, to another embedding in a vector space. For an existing knowledge graph triple, the embedding that the embedding of the subject entity is matched with a matching function to represents a predicted object entity. The matching function provides a way to qualify a triple is true or not. The matching function can for example comprise vector addition or vector multiplication. The goal of the training may be to match the embedding of the subject entity with the embedding of the relation to an embedding of a predicted object entity that is as close as possible to an embedding of the object entity from the knowledge graph triple. A corresponding loss function may comprise a distance metric for a distance between the predicted object and the object of the knowledge graph fact. The method is not limited to this type of training.

Afterwards a step 308 is executed.

In the step 308, the plurality of vector representations of entities and relations 218 is determined with the knowledge graph embedding model 208 in particular depending on the set of triples 216.

Afterwards a step 310 is executed.

In the step 310, the ontology comprising the plurality of constraints that characterize negative samples in the knowledge graph 100 is provided, e.g. read from storage 220.

Afterwards a step 312 is executed.

In the step 312, the at least one triple 224 is determined with the plurality of vector representations of entities and relations 218.

In the example, a triple in the plurality of triples 228 that violates at least one constraint of the constraints or that violates a combination of at least some of the constraints for the correct triples is a negative sample.

In one example, the at least one triple 224 is determined that violates at least one constraint for the correct triples. In one example, the at least one triple 224 is be determined that violates a combination of at least some of the constraints.

Determining the at least one triple 224 in the example comprises determining for at least one triple in the plurality of vector representations of entities and relations 218 its likelihood of being a fact of the knowledge graph 100. This likelihood is in one example a score determined with the knowledge graph embedding model 208. In the example the knowledge graph embedding model 208 provides a prediction together with a score for each prediction. The triples are ranked in the example by the score.

Determining the at least one triple 224 in the example comprises selecting the number of triples in the plurality of vector representations of entities and relations 218 having a higher likelihood of being a fact of the knowledge graph 100 than other triples in the plurality of vector representations of entities and relations 218.

A ranking of triples may comprise m triples sorted by their likelihood from which the number of k facts are selected that have the highest likelihood.

Determining the at least one triple may comprises selecting from the plurality of vector representations of entities and relations 218 at least one triple that is different than the triples in the set of facts 216. This avoids duplicate negative samples in the training.

The at least one triple 224 may be determined from the selected triples.

The at least one triple 224 may be determined based on a knowledge graph triple that is determined from the knowledge graph 100 as will be described below.

In one example, two entities are sampled in particular randomly from entities and a relation is sampled from relations of the knowledge graph. The resulting knowledge graph triple comprises a first entity, the relation and a second entity.

The method may comprise finding depending on the first entity a candidate triple in the plurality of vector representations of entities and relations 218 in particular based on a vector representation of the first entity. The candidate triple is for example sampled from the plurality of vector representations of entities and relations 218.

The method may comprise deciding whether the candidate triple violates at least one constraint for correct triples or not based on the knowledge graph triple. The relation may be used as reference relation.

The method may comprise determining that the candidate triple violates a constraint for correct triples if the relation is unallowable according to the constraint.

The at least one triple 224 in this example is a candidate triple that violates at least one constraint for correct triples.

The at least one triple 224 may be a candidate triple that violates a combination of at least some of the constraints.

Optionally, the steps 302 to 312 are repeated without training for determining further negative samples.

Optionally, for automatically training the knowledge graph embedding model 208 iteratively, afterwards a step 314 is executed.

In the step 314 the at least one triple 224 is added to the set of triples 216.

Afterwards the step 302 is executed.

This means that the knowledge graph embedding model 208 is trained again with the so amended set. This means that based on the knowledge graph embedding model 208 that has been trained again this way, at least one triple 224 is determined.

Determining the at least one triple 224 in step 312 may comprise providing a knowledge graph triple from the knowledge graph 100.

The knowledge graph triple may comprise the first entity, and the reference relation or a representation thereof.

The method is for example repeated until the plurality of triples that is predicted by the knowledge graph embedding model 208 no longer result in inconsistencies with respect to the knowledge graph and the ontology.

The predicted triples may concern a state of a machine, a property of an object in a digital image or an answer to a question.

The aforementioned triples may indicate a state of a machine, a property of an object in a digital image or an answer to a question.

The knowledge graph may represent knowledge about a mapping of status messages of a machine to a machine state. The method may comprise receiving a status message and outputting the machine state depending on the status message. The state may be determined by predicting with the knowledge graph embedding model if a triple comprising a subject entity representing the status and an object entity representing the machine state exists or not. The method may comprise outputting the machine state.

For digital image processing, the knowledge graph may be a description of objects recognized in an object recognition for the image. Entities in the knowledge graph may represent the objects and/or properties thereof. The method may comprise receiving objects and outputting the description depending on the objects.

In a street view, an object may be a car, a person, a house or other part of an infrastructure. In the street view, the knowledge graph triple may describe the object and/or a relation of the object to another object in particular in the digital image. The method may comprise receiving objects and outputting the description depending on the objects.

## Claims

1. Method, in particular computer implemented method for automatically generating negative samples for training a knowledge graph embedding model (208), **characterized by** providing (302) at least one first triple (212), wherein the first triple (212) is a true triple of a knowledge graph (100), providing (304) at least one second triple (214), training (306) the knowledge graph embedding model (208) to predict triples of the knowledge graph (100) depending on a set of triples (216) comprising the at least one first triple (212) and the at least one second triple (214), determining (308) vector representations of entities and relations (218) with the knowledge graph embedding model (208), determining (312) a plurality of triples (228) with the vector representations of entities and relations (218), providing (310) an ontology (222) comprising constraints that characterize correct triples, determining (312) with the ontology at least one triple (224) in the plurality of triples (228) that violates at least one constraint of the constraints or that violates a combination of at least some of the constraints.

2. The method according to claim 1, **characterized in that** determining (312) the at least one triple (224) comprises selecting a number of triples in the plurality of triples (228) having a higher likelihood of being a fact of the knowledge graph than other triples in the plurality of triples (228).

3. The method according to claim 2, **characterized by** determining (308) in particular with the knowledge graph embedding model (208), for at least one triple in the plurality of triples (228) its likelihood of being a fact of the knowledge graph (100).

4. The method according to one of the previous claims, **characterized in that** determining (312) the at least one triple comprises providing a knowledge graph fact from the knowledge graph, wherein the knowledge graph fact comprises a first entity, and a reference relation or a representation thereof, wherein the reference relation is of a reference type, determining a triple in the plurality of triples that comprises the first entity, and a relation, determining if the relation is of a type that is allowable according to the constraint or not, determining that the triple violates the constraint if the type is not allowable.

5. The method according to one of the previous claims, **characterized in that** determining (312) the at least one triple comprises determining a set of triples from the plurality of triples that comprises triples that violate the constraint, and selecting from the plurality of triples at least one triple that is different than the triples in the set of triples.

6. The method according to one of the previous claims, **characterized in that** for automatically training the knowledge graph embedding model the method further comprises determining (312) the at least one triple (224) in a first iteration, adding the at least one triple (224) to the set of triples (216) for a second iteration and training the knowledge graph embedding model (208) in the second iteration with the set of triples (216) for the second iteration and/or determining in the second iteration the at least one triple (224) with the set of triples (216) for the second iteration.

7. Device (200) for automatically generating negative samples for training a knowledge graph embedding model (208), **characterized by** a storage (220) that is configured for providing a knowledge graph (100) and/or an ontology (222) comprising constraints that characterize correct triples, a machine learning system (202), that is configured for providing at least one first triple (212), wherein the first triple (212) is a true triple of the knowledge graph (100), providing at least one second triple (214), training the knowledge graph embedding model (208) to predict triples of the knowledge graph (100) depending on a set of triples (216) comprising the at least one first triple (212) and the at least one second triple (214), and determining (308) vector representations of entities and relations (218) with the knowledge graph embedding model (208), and a generator (204) that is configured for determining (308) a plurality of triples (228) with the vector representations of entities and relations (218), wherein the generator (204) is configured for determining with the ontology (222) at least one triple (224) in the plurality of triples (228) that violates at least one constraint of the constraints or that violates a combination of at least some of the constraints.

8. The device (200) according to claim 7, **characterized in that** the generator (204) is configured for selecting a number of triples in the plurality of triples (228) having a higher likelihood of being a fact of the knowledge graph (100) than other triples in the plurality of triples (228).

9. The device (200) according to claim 8, **characterized in that** the device comprises a machine learning system (202) that is configured for determining in particular with the knowledge graph embedding model (208), for at least one triple in the plurality of triples (228) its likelihood of being a fact of the knowledge graph (100).

10. The device (200) according to one of the claims 7 to 9, **characterized in that** the device comprises storage (206) that is configured for providing a knowledge graph fact from the knowledge graph (100), wherein the knowledge graph fact comprises a first entity, and a reference relation or a representation thereof, wherein the reference relation is of a reference type, and the generator (204) is configured for determining a triple in the plurality of triples that comprises the first entity, and a relation, determining if the relation is of a type that is allowable according to the constraint or not, determining that the triple violates the constraint if the type is not allowable.

11. The device (200) according to one of the claims 7 to 10, **characterized in that** for determining the at least one triple (224), the generator (204) is configured for determining a set of triples from the plurality of triples that comprises triples that violate the constraint, and selecting from the plurality of triples (228) at least one triple that is different than the triples in the set of triples (214).

12. The device (200) according to any one of claims 7 to 11 for automatically training the knowledge graph embedding model (208), **characterized in that** the machine learning system (202) is further configured for determining the at least one triple (224) in a first iteration, adding the at least one triple (224) to the set of triples (216) for a second iteration and for training the knowledge graph embedding model (208) in the second iteration with the set of triples (216) for the second iteration and/or for determining in the second iteration the at least one triple (224) with the set of triples (216) for the second iteration.

13. Computer program, **characterized in that** the computer program comprises instructions that, when executed by a computer, cause the computer to perform the steps of the method according to one of the claims 1 to 6.

14. A non-transitory computer-readable storage medium storing the computer program according to claim 13.
